# EUROPEAN PATENT SPECIFICATION

(11) **EP 2 641 750 B1**
(45) Date of publication and mention of the grant of the patent: **25.10.2017**
(21) Application number: 11841905.0
(22) Date of filing: 15.11.2011
(51) Int. Cl.: F16C 19/18, F16C 33/76, F16C 41/00, F16J 13/00, F16J 15/04, F16J 15/10, G01P 3/487, B60B 7/00, B60B 27/00

(54) **BEARING DEVICE ADAPTED FOR USE IN WHEEL AND PROVIDED WITH ROTATIONAL SPEED DETECTION DEVICE**
LAGERVORRICHTUNG MIT EINER VORRICHTUNG ZUR DREHGESCHWINDIGKEITSERKENNUNG ZUR VERWENDUNG IN EINEM RAD
DISPOSITIF DE PALIER CONÇU POUR ÊTRE UTILISÉ DANS UNE ROUE ET DOTÉ D'UN DISPOSITIF DE DÉTECTION DE VITESSE DE ROTATION

(30) Priority: 16.11.2010 JP 2010255554
(43) Date of publication of application: 25.09.2013
(73) Proprietor: NTN Corporation, Osaka-shi, Osaka 550-0003 (JP)
(72) Inventor: NORIMATSU, Takayuki, Iwata-shi Shizuoka 438-8510 (JP)
(74) Representative: Cohausz & Florack
(86) International application number: PCT/JP2011/076249
(87) International publication number: WO 2012/067091

(56) References cited:
- WO-A1-2011/034134
- WO-A1-2011/115252
- JP-A- 2005 133 953
- JP-A- 2009 150 421
- JP-A- 2010 180 912
- JP-A- 2010 190 421
- JP-B1- 3 636 201
- US-B1- 6 217 220

## Description

### Field of the Invention

The present invention generally relates to a wheel bearing apparatus for rotatably support a wheel of a vehicle such as an automobile with respect to a suspension apparatus, and more particularly to a wheel bearing apparatus provided with a rotational speed detecting apparatus for detecting wheel speed of a vehicle and intended to improve the sealability of the wheel bearing.

### Description of Background Art

It has been generally known a wheel bearing apparatus provided with a rotational speed detecting apparatus which can support a wheel of vehicle with respect to a suspension apparatus and detect a rotation speed of a wheel of vehicle to control the anti-lock braking system (ABS). Such a bearing apparatus generally comprises a sealing apparatus arranged between inner and outer members rotating relatively each other via rolling elements contained therebetween. The rotational speed detecting apparatus comprises a magnetic encoder having magnetic poles alternately arranged along its circumference integrally formed with the sealing apparatus and a rotational speed sensor for detecting change of magnetic poles of the magnetic encoder caused by the rotation of a wheel.

In general, the rotational speed sensor is mounted on a knuckle after the wheel bearing apparatus having been mounted on the knuckle forming part of a suspension apparatus. However, it has been recently proposed a wheel bearing apparatus provided with a rotational speed detecting apparatus in which a rotational speed sensor is also contained within a wheel bearing in order to reduce a whole size of the wheel bearing apparatus and to eliminate the complexity of adjustment of an air gap between the rotational speed sensor and a magnetic encoder.

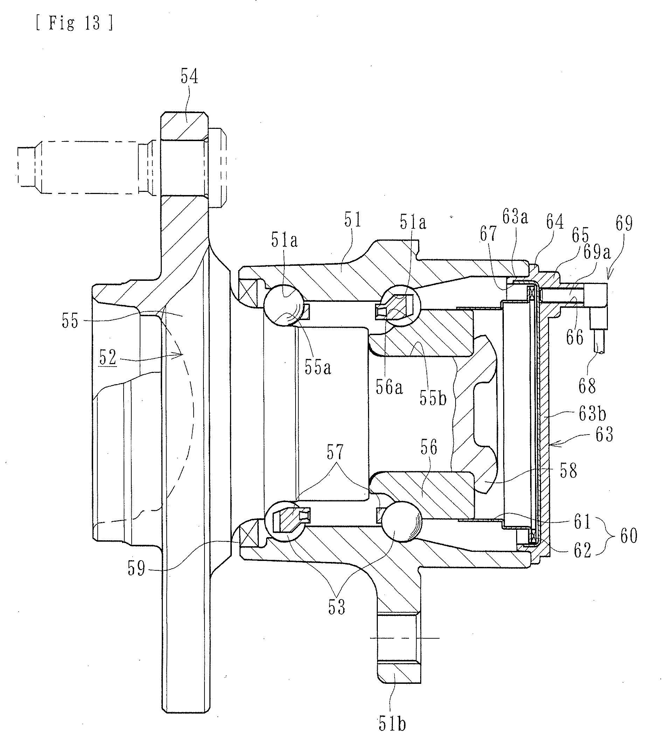

It is known a structure shown in Fig. 13 as one example of the wheel bearing apparatus provided with a rotational speed detecting apparatus. This wheel bearing apparatus comprises an outer member 51 secured on a knuckle (not shown) and forming a stator member, and an inner member 52 inserted into the outer member 51 via double row balls 53, 53. The inner member 52 comprises a hub wheel 55 and an inner ring 56 fitted onto the hub wheel 55.

The outer member 51 has an integrally formed body mounting flange 51b and is formed on its inner circumference double row outer raceway surfaces 51a, 51a. On the other hand, the inner member 52 is formed on its outer circumference with double row inner raceway surfaces 55a, 56a arranged oppositely to the double row outer raceway surfaces 51a, 51a of the outer member 51. One inner raceway surface 55a of the double row inner raceway surfaces 55a, 56a is formed on the outer circumference of the hub wheel 55 and the other of the double row inner raceway surfaces 55a, 56a is formed on the outer circumference of the inner ring 56. The inner ring 56 is press-fitted onto a cylindrical portion 55b axially extending from the inner raceway surface 55a of the hub wheel 55. The double row balls 53, 53 are contained between the outer and inner raceway surfaces and rollably held by cages 57, 57.

The hub wheel 55 has on its one end a wheel mounting flange 54 for mounting a wheel (not shown). The inner ring 56 is axially immovably secured by a caulked portion 58 formed by plastically deforming radially outward the end of the cylindrical portion 55b. The outer-side end of the outer member 51 is provided with a seal 59 and the inner-side end thereof is provided with a cover 63 to prevent leakage of lubricating grease contained in the wheel bearing and entering of rain water or dusts into the wheel bearing from outside.

An encoder 60 is press-fitted onto the outer circumference of the inner ring 56. The encoder 60 comprises an annular supporting member 61 formed of magnetic metal sheet and having a substantially L-shaped cross-section and an encoder body 62 adhered to the side surface of the annular supporting member 61. The encoder body 62 is formed of permanent magnet such as rubber in which ferrite powder is blended therein having N and S poles alternately arranged along its circumference.

The cover 63 is formed of synthetic resin as having a lidded cylindrical configuration so that its cylindrical portion 63a is press-fitted into inner circumference of the inner-side end of the outer member 51 and its lid portion 63b closes an open end of the outer member 51. The cylindrical portion 63a is integrally formed with a flange 64 which enables to exactly position the whole cover 63 relative to the outer member 51 and thus to easily control the position of a sensor 69 mounted on the cover 63.

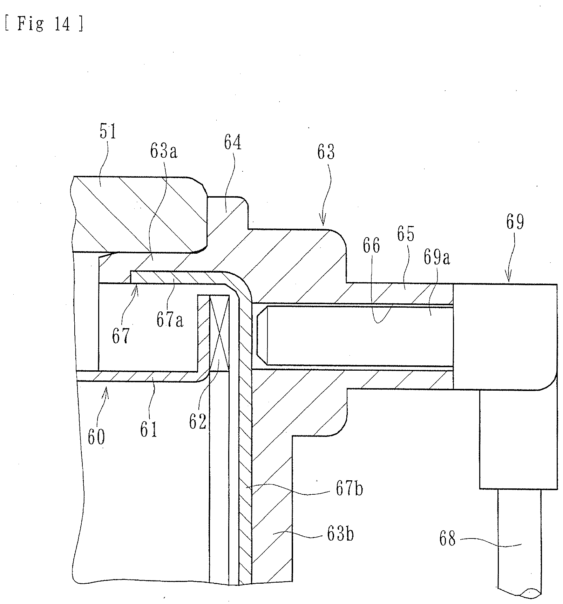

As shown in Fig. 14, the lid portion 63b of the cover 63 is integrally formed with a cylindrical sensor mounting portion 65 and an insertion portion 69a of the sensor 69 is inserted into a sensor mounting bore 66 formed in the sensor mounting portion 65. In addition, a core metal 67 of lidded cylindrical configuration is integrally molded with the cover 63 over a region from the inner circumference of the cylindrical portion 63a to the inside surface of the lid portion 63b. The core metal 67 comprises a cylindrical portion 67a molded integrally with the cylindrical portion 63a of the cover 63, and a lid portion 67b forming a bottom portion of the cylindrical portion 67a. An opening portion of the sensor mounting bore 66 opposing to the encoder body 62 is closed by the lid portion 67b of the core metal 67.

The core metal 67 is formed of non-magnetic steel sheet material having a thickness of about 0.3 mm. Provision of the lid portion 67b increases the strength of the cover 63 and the non-magnetic material does not give any adverse influence to the detecting accuracy of the rotational speed.

The sensor 69 has a body of synthetic resin and is mounted on the cover 63 by inserting the inserting portion 69a into the sensor mounting bore 66 of the cover 63. The inserting portion 69a contains therein a detecting portion (not shown) for detecting variation of magnetic flux generated by rotation of the magnetic encoder 60 at a position near the tip end of the inserting portion 69a and the tip end of the inserting portion 69a is arranged oppositely to the encoder body 62 via a predetermined axial gap with sandwiching the lid portion 67b of the core metal 67 therebetween. Signals from the detecting portion are outputted via a cable 68.

Since the opening portion of the sensor mounting bore 66 of the cover 63 opposing to the encoder body 62 is closed by the lid portion 67b of the core metal 67, path of foreign matter entering into inside of the wheel bearing apparatus is substantially eliminated and thus the sealability of whole the bearing apparatus is improved. (See, e.g., Patent Document 1.)

### Documents of Prior Art

### Patent Document

Patent Document 1: Japanese Patent No. 4286063

JP 2010 180912 A discloses a wheel bearing apparatus according to the preamble of claim 1.

### Disclosure of the Invention

### Problems to be solved by the Invention

In such a wheel bearing apparatus provided with a rotational speed detecting apparatus of the prior art, there would be sometimes caused separations (peelings) or small cracks in joined portions due to difference in coefficient of thermal expansion between the core metal 67 and the cover 63 of synthetic resin i.e. joined portion between the cylindrical portion 67a of the core metal 67 and the cylindrical portion 63a of the cover 63 as well as joined portion between the lid portion 67b of the core metal 67 and the lid portion 63b of the cover 63, it is difficult to maintain the initial sealability for a long term.

It is, therefore, an object of the present invention to provide a wheel bearing apparatus provided with a rotational speed detecting apparatus which can solve problems of prior art and thus improve the reliability of the wheel bearing apparatus.

### Means for solving problems

For achieving the object mentioned above, there is provided, according to the present invention of claim 1, a wheel bearing apparatus provided with a rotational speed detecting apparatus comprising an outer member integrally formed on its outer circumference with a body mounting flange to be mounted on a knuckle and on its inner circumference with double row outer raceway surfaces; an inner member including a hub wheel and at least one inner ring, the hub wheel being integrally formed on its one end with a wheel mounting flange and having a cylindrical portion axially extending from the wheel mounting flange, the inner ring being press-fitted onto the cylindrical portion of the hub wheel, the inner member being formed on its outer circumference with double row inner raceway surfaces opposing to the double row outer raceway surfaces; double row rolling elements contained between the inner raceway surfaces and outer raceway surfaces of the inner member and outer member; a pulser ring adapted to be fitted onto the outer circumference of the inner ring and having a magnetic characteristics alternately and equidistantly varying along its circumferential direction; a first cup-shaped sensor cap press-formed of austenitic stainless steel sheet, coated by cation electro-deposition, and fitted on the inner-side end of the outer member; a rotational speed sensor mounted on the first cup-shaped sensor cap at a radially outer position thereof, the rotational speed sensor being arranged oppositely to the pulser ring via a predetermined axial air gap; a second cup-shaped cap mounted on the outer member, the second cup-shaped cap being press-formed of austenitic stainless steel sheet and comprising a cylindrical fitting portion press-fitted into the inner circumference of the inner-side end of the outer member, a disc portion extending radially inward from the fitting portion and opposing to the pulser ring via a small axial gap, and a bottom portion extending from the disc portion via a bent portion to cover the inner-side end of the inner member; and the rotational speed sensor being arranged oppositely to the pulser ring via the disc portion of the second cup-shaped cap to which the rotational speed sensor is closely arranged; characterized in that the second cup-shaped cap is coated by preserving film wherein the preserving film is formed of cation electro-deposition and primarily coated by phosphoric zinc treatment.

According to the wheel bearing apparatus provided with a rotational speed detecting apparatus of claim 1, since it comprises a pulser ring adapted to be fitted onto the outer circumference of the inner ring and having a magnetic characteristics alternately and equidistantly varying along its circumferential direction; a first cup-shaped sensor cap press-formed of austenitic stainless steel sheet and fitted on the inner-side end of the outer member; and a rotational speed sensor mounted on the first cup-shaped sensor cap at a radially outer position thereof, the rotational speed sensor being arranged oppositely to the pulser ring via a predetermined axial air gap and is characterized in that a second cup-shaped cap is coated by preserving film and mounted on the outer member, the second cup-shaped cap being press-formed of non-magnetic steel sheet and comprising a cylindrical fitting portion press-fitted into the inner circumference of the inner-side end of the outer member, a disc portion extending radially inward from the fitting portion and opposing to the pulser ring via a small axial gap, and a bottom portion extending from the disc portion via a bent portion to cover the inner-side end of the inner member; and that the rotational speed sensor is arranged oppositely to the pulser ring via the disc portion of the second cup-shaped cap to which the rotational speed sensor is closely arranged, it is possible to improve the workability in assembly of the wheel bearing with eliminating the complexity of adjustment of an air gap between the rotational speed sensor and a magnetic encoder and also to tightly seal the inside of the wheel bearing by the second cup-shaped cap. In addition, the sealability in fitting portion can be improved by the preserving film coated on the second cup-shaped cap. Thus it is possible to provide a wheel bearing apparatus provided with a rotational speed detecting apparatus which can improve the reliability of the wheel bearing apparatus.

The preserving film is formed of cation electro-deposition and primarily coated by phosphoric zinc treatment. Since the surface of the blank steel surface is chemically roughened by the phosphoric zinc treatment, adhesion of the preserving film to the steel surface is improved. Thus it is possible to prevent generation of corrosion for a long term.

It is preferable as defined in claim 2 that an elastic member comprising synthetic rubber is integrally adhered by vulcanized coating to the outer circumferential surface of the fitting portion of the second cup-shaped cap. This enables to improve the sealability of the fitting portion between the second cup-shaped cap and the outer member.

It is also preferable as defined in claim 3 that the sheet thickness at least of the disc portion of the second cup-shaped cap is thinner than the sheet thickness of the other portions. This enables to set the air gap smaller and thus to improve the detecting accuracy.

It is preferable as defined in claim 4 that the air gap between the second cup-shaped cap and the rotational speed sensor is set at a range of 0.3 to 1.0 mm. This makes it possible to prevent contact of the rotational speed sensor against the second cap when the wheel bearing would be deformed by applied load and thus to stably keep the detecting accuracy of the rotational speed sensor.

It is preferable as defined in claim 5 that the first cup-shaped sensor cap comprises a cylindrical fitting portion to be fitted on the end of the outer member, and a bottom portion extending radially inward from the fitting portion to be closely contacted to the inner-side end face of the outer member, and that the bottom portion is formed with an insert aperture in parallel with the ground into which the rotational speed sensor is detachably mounted. This enables to improve the positioning accuracy of the first cup-shaped sensor cap and to suppress variation of the air gap between the rotational speed sensor and the pulser ring if relatively inclined condition between the outer and inner members would be caused due to lateral load applied by a wheel and thus to obtain stable detecting accuracy.

It is preferable as defined in claim 6 that the fitting portion of the first cup-shaped sensor cap is press-fitted onto the outer circumference of the inner-side end of the outer member, and that an annular groove is formed on the outer circumference of the inner-side end of the outer member and the outer-side end of the fitting portion is caulked onto the annular groove. This makes it possible to prevent the first cup-shaped sensor cap from being axially slipped off from the outer member due to the repetitive deformations of the fitting portion because of the input load from the wheel and to keep the original air gap. In addition, although the amount of the deformation at the fitting portion of the outer member due to the input load from the wheel becomes larger in thin area of the outer member and thus this fact is unfavorable to prevent the member from being axially slipped off, the caulking of the first cup-shaped sensor cap increases the fastening force of the first cup-shaped sensor cap and thus contributes to reduction of thickness of the outer member and accordingly weight of whole the bearing apparatus.

It is also preferable as defined in claim 7 that the first cup-shaped sensor cap is formed of austenitic stainless steel sheet having anti-corrosion property. This enables to prevent generation of corrosion for a long term and thus improve the durability of the wheel bearing apparatus.

It is preferable as defined in claim 8 that a drain is formed on the first cup-shaped sensor cap at a corner between the fitting portion and the bottom portion nearest to the ground. This makes it possible to effectively discharge, from the radially bottom portion, foreign matters such as rain water which would enter into inside of the first cup-shaped sensor cap since the foreign matters would liquidly falls within the first cup-shaped sensor cap.

It is also preferable as defined in claim 9 that an aperture is formed on the bottom portion of the first cup-shaped sensor cap at or near the center thereof and a securing nut is press-fitted into the aperture from the outer-side of the bottom portion, and that the rotational speed sensor is secured by fastening a mounting bolt into the securing nut. This makes it possible to prevent the rotational speed sensor from being fallen off from the first cup-shaped sensor cap by a fastening force due to cooperation of the mounting bolt and the securing nut. In this case, provision of any axial groove around the press-fitting portion of the securing nut will prevent slippage of the nut during fastening of the mounting bolt.

It is preferable as defined in claim 10 that the pitch circle diameter of the outer-side row of rolling elements is set larger than the pitch circle diameter of the inner-side row of rolling elements, that the diameter of each rolling element of the outer-side row is set smaller than the diameter of each rolling element of the inner-side row, and that the number of the outer-side row of rolling element is set larger than the number of the inner-side row of rolling element. This enables to increase the bearing rigidity of the outer-side bearing row than that of the inner-side bearing row and thus to extend the life of the wheel bearing apparatus with suppressing increase of the dimension of the outer-side of the outer member.

### Effects of the invention

According to the wheel bearing apparatus provided with a rotational speed detecting apparatus of the present invention, since it comprises an outer member integrally formed on its outer circumference with a body mounting flange to be mounted on a knuckle and on its inner circumference with double row outer raceway surfaces; an inner member including a hub wheel and at least one inner ring, the hub wheel being integrally formed on its one end with a wheel mounting flange and having a cylindrical portion axially extending from the wheel mounting flange, the inner ring being press-fitted onto the cylindrical portion of the hub wheel, the inner member being formed on its outer circumference with double row inner raceway surfaces opposing to the double row outer raceway surfaces; double row rolling elements contained between the inner raceway surfaces and outer raceway surfaces of the inner member and outer member; a pulser ring adapted to be fitted onto the outer circumference of the inner ring and having a magnetic characteristics alternately and equidistantly varying along its circumferential direction; a first cup-shaped sensor cap press-formed of steel sheet and fitted on the inner-side end of the outer member; and a rotational speed sensor mounted on the first cup-shaped sensor cap at a radially outer position thereof, the rotational speed sensor being arranged oppositely to the pulser ring via a predetermined axial air gap and is characterized in that a second cup-shaped cap is coated by preserving film and mounted on the outer member, the second cup-shaped cap being press-formed of non-magnetic steel sheet and comprising a cylindrical fitting portion press-fitted into the inner circumference of the inner-side end of the outer member, a disc portion extending radially inward from the fitting portion and opposing to the pulser ring via a small axial gap, and a bottom portion extending from the disc portion via a bent portion to cover the inner-side end of the inner member; and that the rotational speed sensor is arranged oppositely to the pulser ring via the disc portion of the second cup-shaped cap to which the rotational speed sensor is closely arranged, it is possible to improve the workability in assembly of the wheel bearing with eliminating the complexity of adjustment of an air gap between the rotational speed sensor and a magnetic encoder and also to tightly seal the inside of the wheel bearing by the second cup-shaped cap. In addition, the sealability in fitting portion can be improved by the preserving film coated on the second cup-shaped cap. Thus it is possible to provide a wheel bearing apparatus provided with a rotational speed detecting apparatus which can improve the reliability of the wheel bearing apparatus.

### Brief Description of the Drawings

[Fig.1] A longitudinal-section view of a first embodiment of a wheel bearing apparatus provided with a rotational speed detecting apparatus of the present invention;
[Fig. 2] A partially enlarged view of a detecting portion of Fig. 1;
[Fig.3] A longitudinal-section view of a second embodiment of a wheel bearing apparatus provided with a rotational speed detecting apparatus of the present invention taken along a line III-O-III in Fig. 4;
[Fig.4] A side elevation view of Fig. 3;
[Fig.5] A partially enlarged view of a detecting portion of Fig. 3;
[Fig.6] A partially enlarged view of a drain portion of Fig. 3;
[Fig.7] A partially enlarged view of a modification of Fig. 5;
[Fig.8] A longitudinal-section view of a third embodiment of a wheel bearing apparatus provided with a rotational speed detecting apparatus of the present invention;
[Fig.9] A partially enlarged view of a detecting portion of Fig. 8;
[Fig.10] A partially enlarged view of a drain portion of Fig. 8;
[Fig.11] A longitudinal-section view of a fourth embodiment of a wheel bearing apparatus provided with a rotational speed detecting apparatus of the present invention;
[Fig.12] A partially enlarged view of a drain portion of Fig. 11;
[Fig.13] A longitudinal-section view of a wheel bearing apparatus provided with a rotational speed detecting apparatus of the prior art: and
[Fig.14] A partially enlarged view of Fig. 13.

### One preferable mode for carrying out the Invention

One preferable mode for carrying out the present invention is a wheel bearing apparatus provided with a rotational speed detecting apparatus comprising an outer member integrally formed on its outer circumference with a body mounting flange to be mounted on a knuckle and on its inner circumference with double row outer raceway surfaces; an inner member including a hub wheel and at least one inner ring, the hub wheel being integrally formed on its one end with a wheel mounting flange and having a cylindrical portion axially extending from the wheel mounting flange, the inner ring being press-fitted onto the cylindrical portion of the hub wheel, the inner member being formed on its outer circumference with double row inner raceway surfaces opposing to the double row outer raceway surfaces; double row rolling elements contained between the inner raceway surfaces and outer raceway surfaces of the inner member and outer member; a pulser ring adapted to be fitted onto the outer circumference of the inner ring and having a magnetic characteristics alternately and equidistantly varying along its circumferential direction; a cup-shaped sensor cap press-formed of steel sheet and fitted on the inner-side end of the outer member; and a rotational speed sensor mounted on the sensor cap at a radially outer position thereof, the rotational speed sensor being arranged oppositely to the pulser ring via a predetermined axial air gap characterized in that a cup-shaped cap is coated by preserving film and mounted on the outer member, the cap being press-formed of non-magnetic steel sheet and comprising a cylindrical fitting portion press-fitted into the inner circumference of the inner-side end of the outer member, a disc portion extending radially inward from the fitting portion and opposing to the pulser ring via a small axial gap, and a bottom portion extending from the disc portion via a bent portion to cover the inner-side end of the inner member; and that the rotational speed sensor is arranged oppositely to the pulser ring via the disc portion of the cap to which the rotational speed sensor is closely arranged and the air gap between the cap and the rotational speed sensor is set at a range of 0.3 to 1.0 mm.

Preferred embodiments of the present invention will be described with reference to the accompanied drawings.

### First Embodiment

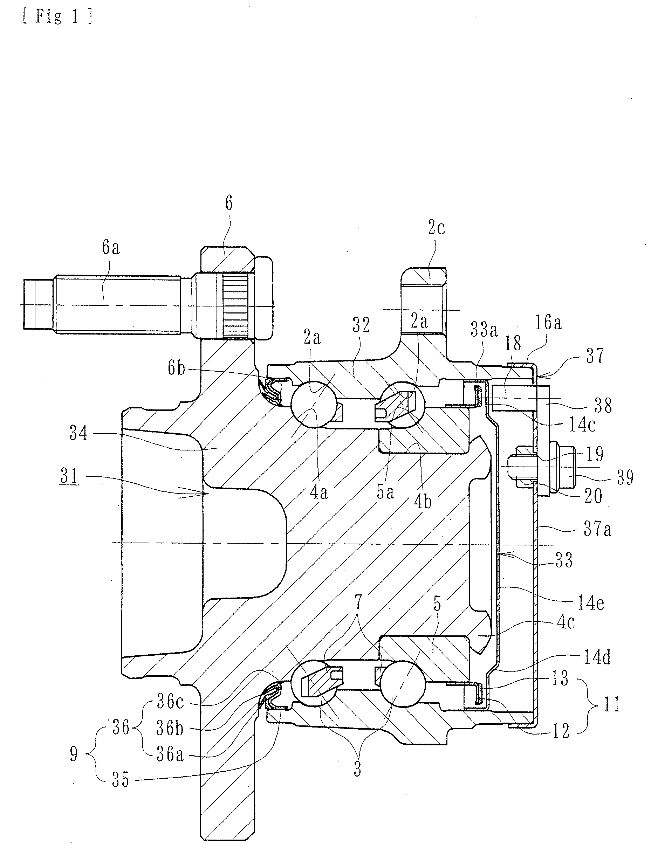

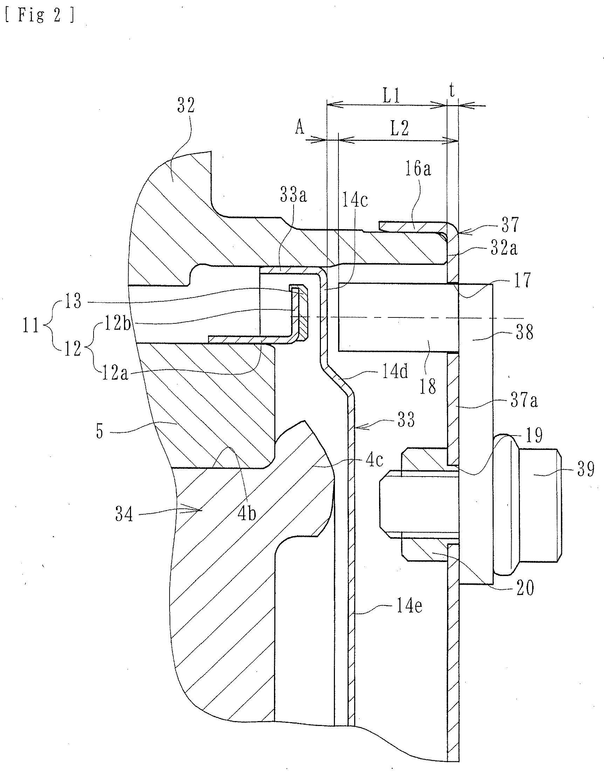

Fig.1 is a longitudinal-section view of a first embodiment of a wheel bearing apparatus provided with a rotational speed detecting apparatus of the present invention, and Fig. 2 is a partially enlarged view of a detecting portion of Fig.1. In the description below, an outer-side of a bearing apparatus when it is mounted on a vehicle is referred to as "outer-side" (a left side in a drawing), and an inner-side of a bearing apparatus when it is mounted on a vehicle is referred to as "inner side" (a right side in a drawing).

The wheel bearing apparatus provided with a rotational speed detecting apparatus of Fig. 1 is a so-called "third generation" type for a driven wheel and comprises an inner member 31, an outer member 32, and double row rolling elements (balls) 3,3 contained between the inner and outer members 31 and 32. The inner member 31 includes the hub wheel 34 and an inner ring 5 press-fitted onto the hub wheel 34.

The hub wheel 34 is integrally formed, on its outer-side end, with a wheel mounting flange 6 for mounting a wheel (not shown) and formed, on its outer circumference, with one (i.e. outer-side) inner raceway surface 4a from which axially extends a cylindrical portion 4b. Hub bolts 6a are secured on the wheel mounting flange 6 at its circumferentially equidistant positions.

The inner ring 5 is formed, on its outer circumference, with the other (i.e. inner-side) inner raceway surface 5a and press-fitted onto the cylindrical portion 4b of the hub wheel 34 via a predetermined interference and axially secured on the hub wheel 34 under a condition of a predetermined bearing pre-pressure being applied by a caulked portion 4c formed by plastically deforming the end of the cylindrical portion 4b radially outward.

The hub wheel 34 is made of medium-high carbon steel such as S53C including carbon of 0.40 ∼ 0.80 % by weight and is hardened by high frequency induction hardening as having a surface hardness of 58 to 64 HRC over a region from an inner-side base 6b of the wheel mounting flange 6 to the cylindrical portion 4b including the inner raceway surface 4a. The caulked portion 4c is not hardened so as to have a surface hardness less than 25 HRC after forging. The inner ring 5 and the rolling elements 3 are formed of high carbon chrome steel such as SUJ2 and dipping hardened to their cores as having a hardness of 58 to 64 HRC.

Outer member 32 is formed, on its outer circumference, with body mount flange 2c to be mounted on a knuckle (not shown) and also formed, on its inner circumference, with double row outer raceway surfaces 2a, 2a corresponding to the double row inner raceway surfaces 4a, 5a of the inner member 31. Similarly to the hub wheel 34, the outer member 32 is formed of medium-high carbon steel such as S53C including carbon of 0.40 to 0.80 % by weight and is hardened by high frequency induction hardening as having a surface hardness of 58 to 64 HRC. The double row rolling elements 3, 3 are contained between the outer and inner double row outer raceway surfaces 2a, 2a; 4a, 5a and rollably held therein by cages 7, 7.

A seal 9 is mounted on the outer-side annular opening formed by the outer member 32 and the inner member 31 and a cap 33 is mounted on the inner-side annular opening in order to close and seal the annular openings and to prevent leakage of lubricating grease sealed within the bearing and entering of rain water or dusts from outside into the bearing.

Although it is shown here the wheel bearing apparatus formed by a double row angular contact ball bearing using balls as rolling elements 3, the present invention is not limited to such a bearing and may be a double row tapered roller bearing using tapered rollers as rolling elements 3. In addition, although it is shown here the bearing of third generation type, the present invention can be applied to a so-called second generation type bearing in which a pair of inner rings is press-fitted onto the hub wheel.

The outer-side seal 9 is formed as an integrated seal comprising a core metal 35 press-fitted into the outer-side end of the outer member 32 via a predetermined interface and a sealing member 36 adhered to the core metal 35 via vulcanized adhesion. The core metal 35 is press-formed of austenitic stainless steel sheet (JIS SUS 304 etc) or cold rolled steel sheet (JIS SPCC etc.) as having a substantially L-shaped cross-sectional configuration.

On the other hand, the sealing member 36 is formed of synthetic rubber such as NBR (acrylonitrile-butadiene rubber) etc. and comprises a side lip 36a slide-contacting with the inner-side surface of the wheel mounting flange 6 via a predetermined interference, a dust lip 36b slide-contacting with the base 6b of circular arc cross-section via a predetermined interference, and grease lips 36c slide-contacting with the base 6b via a predetermined interference.

There are examples of material of the sealing member 36 other than NBR, such as HNBR (hydrogenation acrylonitric-butadiene rubber), EPDM (ethylene propylene rubber), ACM (poly-acrylic rubber) superior in heat and chemical resistance, FKM (fluororubber) or silicone rubber.

A pulser ring 11 is press-fitted onto the outer circumference of the inner ring 5. This pulser ring 11 comprises an annular supporting member 12 having a L-shaped cross-section and press-formed of a steel plate such as ferritic stainless steel sheet (JIS SUS 430 etc.) or preserved cold rolled steel sheet, and a magnetic encoder 13 integrally adhered to the inner-side surface of the annular supporting member 12 via vulcanized adhesion.

As shown in the enlarged view of Fig. 2, the annular supporting member 12 comprises a cylindrical fitting portion 12a press-fitted onto the outer circumference of the inner ring 5 and a standing portion 12b extending radially outward from the fitting portion 12a. The magnetic encoder 13 is integrally adhered to the standing portion 12b. The magnetic encoder 13 is formed of elastomer such as synthetic rubber into which ferritic magnetic powder is mingled so that N and S poles are alternately arranged along its circumference to form a rotary encoder for detecting the rotation of a wheel.

Although it is shown here the magnetic encoder 13 formed of rubber magnet, it is possible to use other kinds of encoders such as a pulser ring of steel sheet formed with a plurality of through apertures or irregularities or formed of sintered alloy or that to which plastic magnet plate is adhered.

According to the present invention, the inner-side opening of the outer member 32 is closed by a cap 33 press-fitted into the inner circumference of inner-side end of the outer member 32. In order to prevent the detecting performance of the rotational speed sensor 18 from being adversely effected by the cap 33, it is formed of non-magnetic steel sheet such as austenitic stainless steel sheet having anti-corrosion property on which a preserving film is formed of cation electro-deposition and primarily coated by phosphoric zinc treatment. Since the surface of the blank steel surface of the cap 33 is chemically roughened by the phosphoric zinc treatment, adhesion of the preserving film to the steel surface is improved. Thus it is possible to prevent generation of corrosion for a long term and to improve the sealability between the outer member 32 and the cap 33. It is possible to use as the preserving film anion electro-deposition coating or fluorine electro-deposition coating other than the cation electro-deposition coating.

The cap 33 comprises a cylindrical fitting portion 33a press-fitted into the inner circumference of the inner-side end of the outer member 32, a disc portion 14c extending radially inward from the fitting portion 33a and opposing to the magnetic encoder 13 via a small axial gap, and a bottom portion 14e extending from the disc portion 14c via a bent portion 14d to cover the inner-side end of the inner member 31.

According to the present invention, a sensor cap 37 is further mounted on the outer member 32 at an inner-side position from the cap 33. The sensor cap 37 is press-formed of austenitic stainless steel sheet having anti-corrosion property as having a cup-shaped configuration on which preserving treatment such as cation electro-deposition is performed. The sensor cap 37 comprises a cylindrical fitting portion 16a to be fitted on the outer circumference of the inner-side end of the outer member 32, and a bottom portion 37a to be closely contacted to the inner-side end face 32a of the outer member 32.

The bottom portion 37a of the sensor cap 37 is formed with an insert aperture 17 in its radially outer portion and the rotational speed sensor 18 is inserted into the insert aperture 17. The rotational speed sensor 18 is embedded in synthetic resin such as PA 66 and comprises an IC circuit incorporated with a magnetic detecting element such as a Hall element, a magnetic resistance element (MR element) etc. for varying magnetic characteristics according to the flow of the magnetic flux, and a waveform shaping circuit for shaping the output waveform of the magnetic detecting element and forms part of the ABS of an automobile for detecting the rotational speed of a wheel and controlling it.

An axially extending aperture 19 is formed near the insert aperture 17 and a securing nut 20 is press-fitted into the aperture 19 from the outer-side of the bottom portion 37a. The rotational speed sensor 18 inserted into the insert aperture 17 of the sensor cap 37 is secured by fastening a mounting bolt 39 into the securing nut 20 via a mounting member 38. The securing nut 20 may be caulked in the aperture 19 of the sensor cap 37.

The rotational speed sensor 18 is arranged with being closed to the disc portion 14c of the cap 33. This makes it possible to improve the workability in assembly of the wheel bearing with eliminating the complexity of adjustment of an air gap between the rotational speed sensor 18 and a magnetic encoder 13 and also to tightly seal the inside of the wheel bearing by the cap 33 and thus it is possible to provide a wheel bearing apparatus provided with a rotational speed detecting apparatus which can improve its reliability. In addition, according to the present invention, since the cap 33 is press-fitted into the inner circumference of the end of the outer member 32, it is possible to increase the rigidity of the cap 33 itself as compared with that press-fitted onto the outer circumference of the outer member 32 and also the sealability of the fitting portion between the cap 33 and the outer member 32 due to the preserving film coated on the cap 33.

In Fig. 2, an air gap A (an axial gap between the cap 33 and the rotational speed sensor 18) is set within a range of 0.3 to 1.0 mm. This is because the air gap A less than 0.3 mm would cause contact of the rotational speed sensor 18 to the cap 33 when the bearing is deformed by an applied load and on the contrary the air gap A exceeding 1.0 mm would make the detecting ability of the rotational speed sensor 18 unstable.

The range of the air gap A is determined by controlling each part and its assembling accuracy. For example, assuming that a press-fitting position L1 of the cap 33 is 8 mm and its interference is±0.1 mm, a thickness t of the sensor cap 37 is 1 mm and its interference is±0.1 mm, and a length L2 of the rotational speed sensor 18 is 8.35 mm and its interference is±0.15, the air gap A ( = L1 + t - L2) will be 0.65 mm±0.35 mm. Accordingly, it is possible to set the variation of the air gap A will be a range of 0.3 to 1.0 mm.

### Second Embodiment

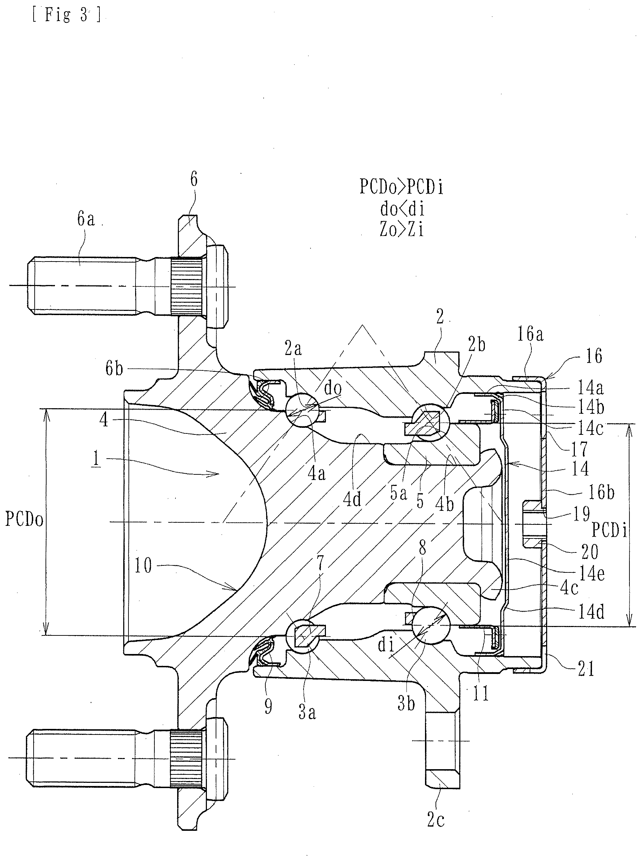

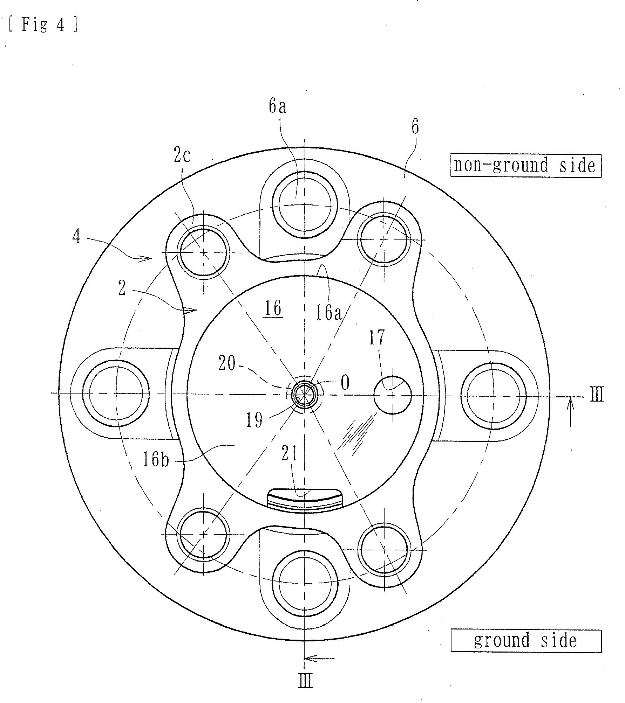

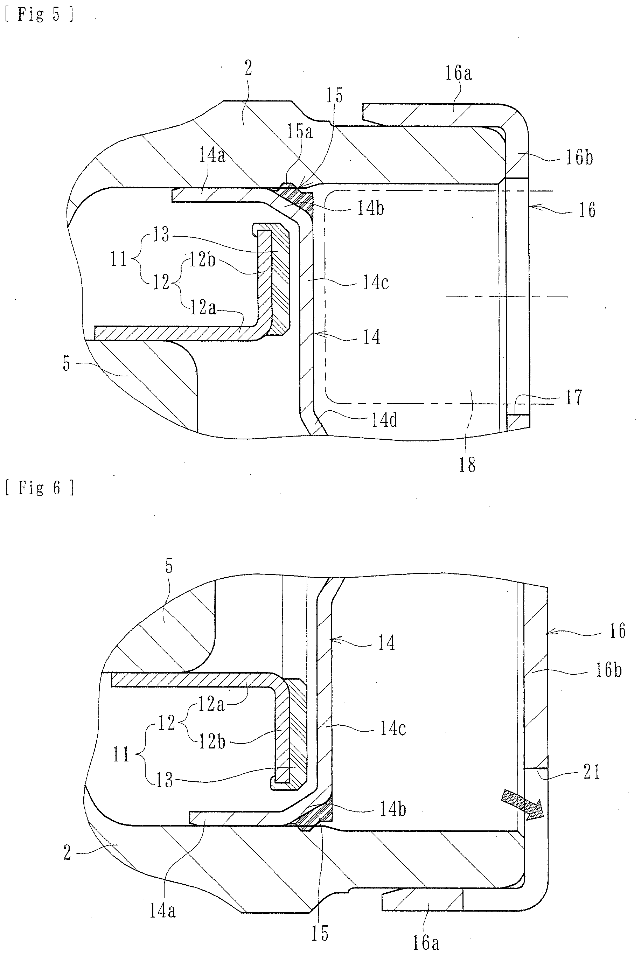

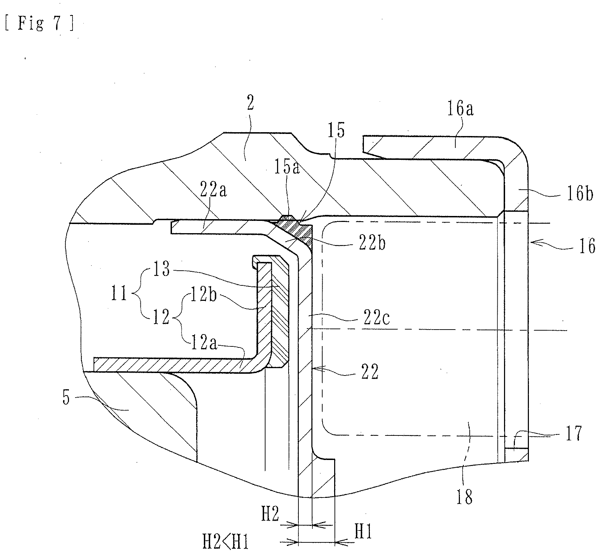

Fig.3 is a longitudinal-section view of a second embodiment of a wheel bearing apparatus provided with a rotational speed detecting apparatus of the present invention taken along a line III-O-III in Fig. 4, Fig.4 is a side elevation view of Fig. 3, Fig.5 is a partially enlarged view of a detecting portion of Fig. 3, Fig.6 is a partially enlarged view of a drain portion of Fig. 3, and Fig.7 is a partially enlarged view of a modification of Fig. 5. In this embodiment, same reference numerals are used for designating same structural elements as those used in the previous embodiment.

This wheel bearing apparatus provided with a rotational speed detecting apparatus is a so-called "third generation" type for a driven wheel and comprises an inner member 1, an outer member 2, and double row rolling elements (balls) 3a, 3b contained between the inner and outer members 1 and 2. The inner member 1 includes the hub wheel 4 and an inner ring 5 press-fitted onto the hub wheel 4.

The hub wheel 4 is integrally formed, on its outer-side end, with a wheel mount flange 6 and formed, on its outer circumference, with one inner raceway surface 4a from which a cylindrical portion 4b extends via an axially extending shaft portion 4d.

An axially extending cup-shaped recess 10 is formed on the outer-side end of the hub wheel 4. This recess 10 is formed by forging and extends near to the bottom of the outer-side inner raceway surface 4a so that a wall thickness of the outer-side portion of the hub wheel 4 is substantially uniform.

The inner ring 5 is formed, on its outer circumference, with the other inner raceway surface 5a and press-fitted onto the cylindrical portion 4b of the hub wheel 4 and axially secured on the hub wheel 4 by a caulked portion 4c formed by plastically deforming the end of the cylindrical portion 4b. This enables to reduce the weight and size of the bearing apparatus. The rolling elements 3a, 3b are formed of high carbon chrome steel such as SUJ2 and dipping hardened to their cores as having a hardness of 58 to 64 HRC.

The hub wheel 4 is made of medium-high carbon steel such as S53C including carbon of 0.40 to 0.80% by weight and is hardened by high frequency induction hardening as having a surface hardness of 58 to 64 HRC over a region from an inner-side base 6b of the wheel mounting flange 6 to the cylindrical portion 4b including the inner raceway surface 4a. This enables to apply sufficient mechanical strength against the rotary bending load applied to the wheel mounting flange 6, to improve the fretting strength of the cylindrical portion 4b forming the fitting portion of the inner ring 5.

Outer member 2 is formed, on its outer circumference, with body mounting flange 2c and also formed, on its inner circumference, with an outer-side outer raceway surface 2a opposing to the inner raceway surface 4a of the hub wheel 4 and an inner-side outer raceway surface 2b opposing to the inner raceway surface 5a of the inner ring 5. Double row rolling elements 3a, 3b are contained between these outer and inner raceway surfaces and rollably held by cages 7, 8. A seal 9 is mounted on the outer-side opening formed between the outer member 2 and the inner member 1 and a cap 14 described below is mounted on the inner-side opening in order to prevent leakage of lubricating grease sealed within the bearing and entering of rain water or dusts from the outside into the bearing.

Outer member 2 is formed of medium-high carbon steel such as S53C including carbon of 0.40 to 0.80% by weight and is formed, on its inner circumference, with double row outer raceway surfaces 2a, 2 b which are hardened by high frequency induction hardening as having a surface hardness of 58 to 64 HRC.

In this embodiment, the pitch circle diameter PCDo of the outer-side row of rolling elements 3a is set larger than the pitch circle diameter PCDi of the inner-side row of rolling elements 3b (PCDo>PCDi), the diameter do of each rolling element 3a of the outer-side row is set smaller than the diameter di of each rolling element 3b of the inner-side row (do<di), and the number Zo of the outer-side row of rolling element 3a is set larger than the number Zi of the inner-side row of rolling element 3b (Zo>Zi). This makes it possible to increase the bearing rigidity of the outer-side row as compared with that of the inner-side row and thus to extend the life of bearing. Although it is shown here a wheel bearing in which the size of each rolling element is different in the outer-side row and the inner side row, it will be understood that same size of rolling elements can be used in both rows.

The pulser ring 11 is press-fitted onto the outer circumference of the inner ring 5. As shown in an enlarged view of Fig. 5, the pulser ring 11 comprises an annular supporting member 12 and the magnetic encoder 13 integrally adhered to the inner-side surface of the annular supporting member 12 via vulcanized adhesion.

The inner-side opening of the outer member 2 is closed by the cap 14 press-fitted into the inner circumference of inner-side end of the outer member 2. In order to prevent the detecting performance of the rotational speed sensor 18 from being adversely effected by the cap 14, it is formed of non-magnetic steel sheet such as austenitic stainless steel sheet having anti-corrosion property on which a preserving film is formed of cation electro-deposition. The cap 14 comprises a cylindrical fitting portion 14a press-fitted into the inner circumference of the inner-side end of the outer member 2, the disc portion 14c extending radially inward from the fitting portion 14a via a radially reducing portion 14b and opposing to the magnetic encoder 13 via a small axial gap, and the bottom portion 14e extending from the disc portion 14c via the bent portion 14d to cover the inner-side end of the inner member 1 (see Fig. 3).

In this embodiment, an elastic member 15 of synthetic rubber such as NBR is integrally adhered to the radially reducing portion 14b of the cap 14 by vulcanizing adhesion. The elastic member 15 has an annular projection 15a projected radially outward from the fitting portion 14a so that the annular projection 15a does not project toward the inner-side from the side of the disc portion 14c not so as to interfere with the rotational speed sensor 18. The fitting surface of the inner circumference of the inner-side end of the outer member 2 is formed so that the amplitude of chatter vibration in machining is limited to 3µm or less and the annular projection 15a is elastically deformed and tightly contacted with the end inner circumference of the outer member 2 when the projection 15a is press-fitted to improve the sealability of the fitting portion 14a.

A sensor cap 16 is further mounted on the outer member 2 at an inner-side position from the cap 14. The sensor cap 16 is press-formed of austenitic stainless steel sheet having anti-corrosion property as having a cup-shaped configuration on which preserving treatment such as cation electro-deposition is performed. The sensor cap 16 comprises the cylindrical fitting portion 16a to be fitted on the outer circumference of the inner-side end of the outer member 2, and a bottom portion 16b to be closely contacted to the inner-side end face of the outer member 2.

As shown in Fig. 4, the bottom portion 16b of the sensor cap 16 is formed with the insert aperture 17 at a horizontal position corresponding to the magnetic encoder 13 and the rotational speed sensor 18 is inserted into the insert aperture 17. This enables to suppress variation of the air gap between the rotational speed sensor 18 and the magnetic encoder 13 if relatively inclined condition between the outer and inner members 2,1 would be caused due to lateral load applied by a wheel and thus to obtain stable detecting accuracy.

In this embodiment, a drain 21 is formed on the bottom portion 16b of the sensor cap 16 at a radially outer position (see Figs. 4 and 6). The drain 21 is formed at a corner between the fitting portion 16a and the bottom portion 16b nearest to the ground. This makes it possible to effectively discharge foreign matters such as rain water etc. which would enter into inside of the sensor cap 16. Although a rectangular aperture is illustrated as the drain 21, other configurations such as ellipse etc. may be selected.

Fig. 7 shows a modification of Fig. 5. This modification is basically different only in the configuration of the cap 14 and thus its detailed description will be omitted and same reference numerals are used for designating same structural element.

According to this modification, the inner-side opening of the outer member 2 is closed by a cap 22. In order to prevent the detecting performance of the rotational speed sensor 18 from being adversely effected by the cap 22, it is formed of non-magnetic steel sheet such as austenitic stainless steel sheet having anti-corrosion property as having a cup-shaped configuration. The cap 22 comprises a cylindrical fitting portion 22a provided with an elastic member 15 comprising synthetic rubber press-fitted into the inner circumference of the inner-side end of the outer member 2, and a disc portion 22c extending radially inward from the fitting portion 22a via a radially reducing portion 22b.

In addition, the sheet thickness H2 of a region from the fitting portion 22a to the disc portion 22c is formed thinner than the sheet thickness H1 of the other portions. More particularly, the sheet thickness H2 at least of the disc portion 22c of the cap 22 is 0.2 to 1.0 mm and the sheet thickness H1 of the other portions is 1.0 to 1.5 mm. This enables to set the air gap smaller and thus to improve the detecting accuracy. In this case, if the sheet thickness H2 is less than 0.2 mm, it would be difficult to exactly form the configuration of the disc portion 22c, on the other hand if the sheet thickness H2 exceeds 1.0 mm, the air gap would be too large to obtain a desirable magnetic property and exact detection.

### Third Embodiment

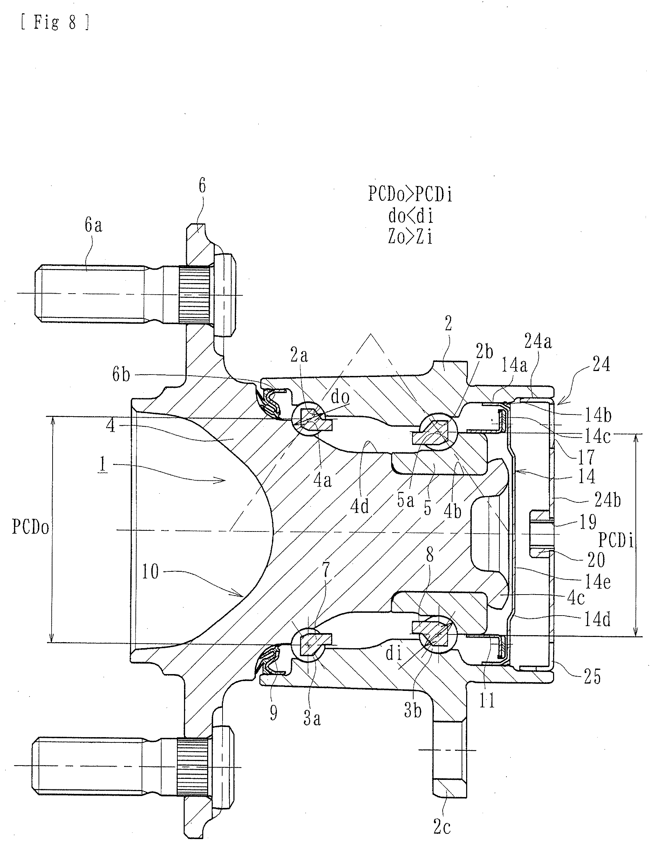

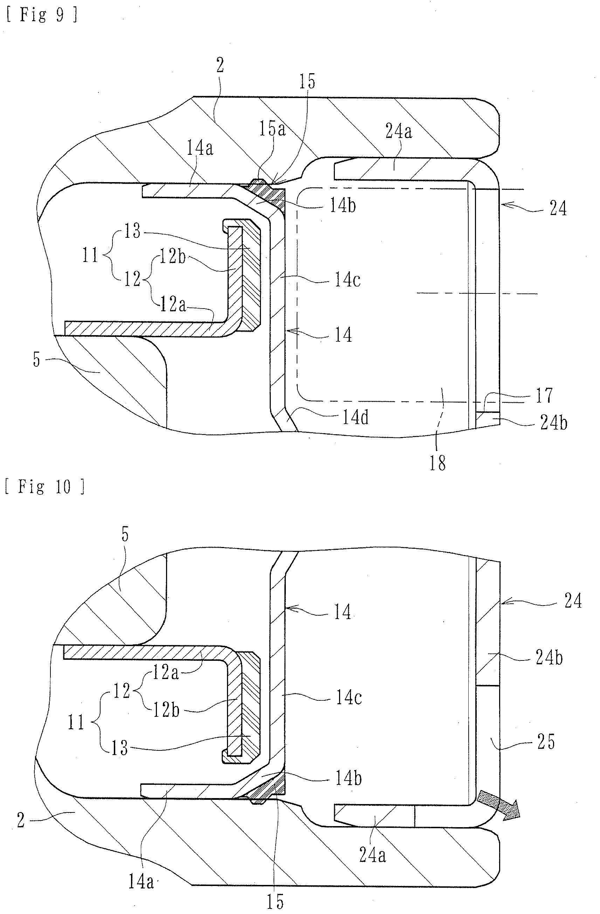

Fig.8 is a longitudinal-section view of a third embodiment of a wheel bearing apparatus provided with a rotational speed detecting apparatus of the present invention, Fig.9 is a partially enlarged view of a detecting portion of Fig. 8, and Fig.10 is a partially enlarged view of a drain portion of Fig. 8. This embodiment is basically different from the second embodiment (Fig. 3) only in the structure of the sensor cap 24 and thus its detailed description will be omitted and same reference numerals are used for designating same structural element.

This sensor cap 24 is press-fitted into the inner circumference of the inner-side end of the outer member 2. The sensor cap 24 is press-formed of austenitic stainless steel or cold rolled steel sheet on which preserving treatment such as cation electro-deposition or zinc deposition is performed and comprises a cylindrical fitting portion 24a to be fitted on the inner circumference of the inner-side end of the outer member 2, and a bottom portion 24b to be closely contacted to the inner-side end face of the outer member 2. A securing nut 20 is press-fitted into the bottom portion 24b at or near the center thereof. According to this embodiment, since the sensor cap 24 is press-fitted into the inner circumference of the outer member 2, it is possible to more increase the rigidity of the sensor cap 24 than the outer circumference press-fitting type in which the sensor cap is press-fitted onto the outer circumference of the inner-side end of the outer member and thus to prevent the sensor cap 24 from being deformed or damaged by pebbles during running of a vehicle.

As shown in the enlarged view of Fig. 9, The bottom portion 24b of the sensor cap 24 is formed with the insert aperture 17 at a position corresponding to the magnetic encoder 13 and the rotational speed sensor 18 is inserted into the insert aperture 17. As shown in the enlarged view of Fig. 10, a drain 25 is formed on the bottom portion 24b of the sensor cap 24 at its radially outer position. The drain 25 is formed at a corner between the fitting portion 24a and the bottom portion 24b nearest to the ground. This makes it possible to effectively discharge foreign matters such as rain water etc. which would enter into inside of the sensor cap 24.

### Fourth Embodiment

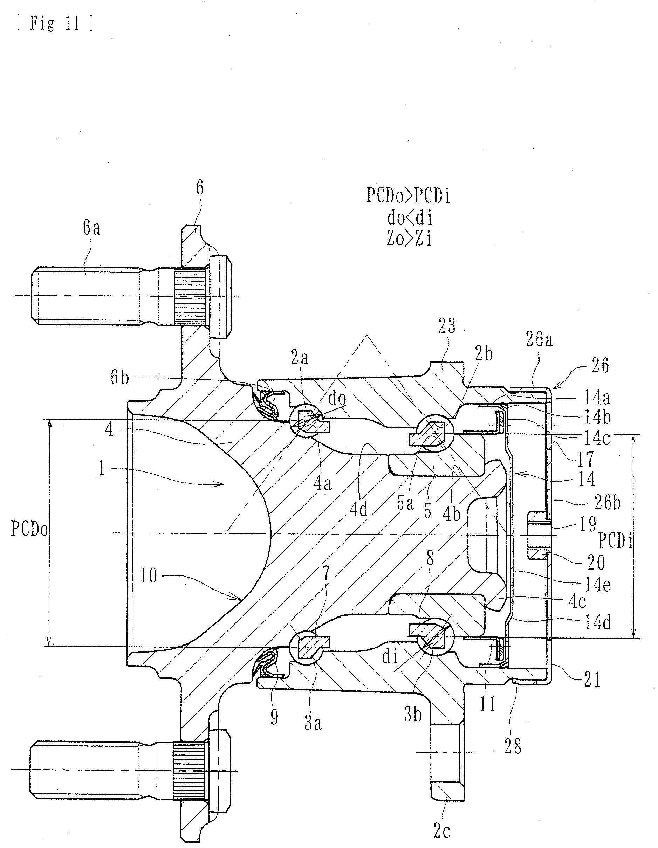

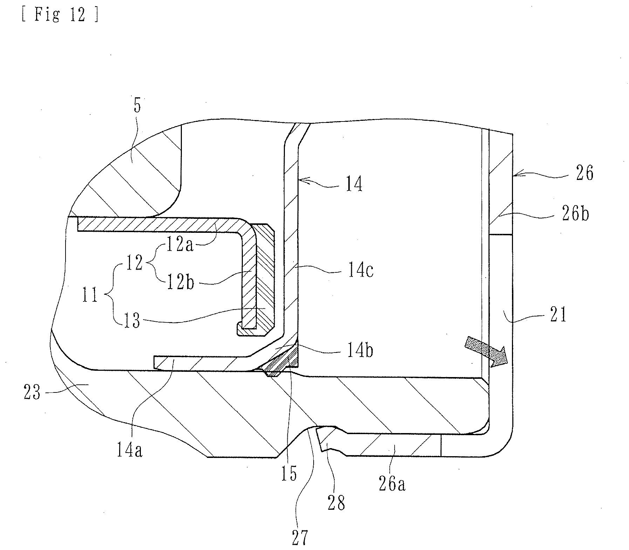

Fig.11 is a longitudinal-section view of a fourth embodiment of a wheel bearing apparatus provided with a rotational speed detecting apparatus of the present invention, and Fig.12 is a partially enlarged view of a drain portion of Fig. 11. This embodiment is basically different from the second embodiment (Fig. 3) only in the structure of the sensor cap 26 and thus its detailed description will be omitted and same reference numerals are used for designating same structural element.

This sensor cap 26 is press-fitted into the outer circumference of the inner-side end of an outer member 23. The sensor cap 26 is press-formed of austenitic stainless steel cation electro-deposited as having a cup shaped configuration and comprises a cylindrical fitting portion 26a to be fitted on the outer circumference of the inner-side end of the outer member 23, and a bottom portion 26b to be closely contacted to the inner-side end face of the outer member 23. The securing nut 20 is press-fitted into the bottom portion 26b at or near the center thereof.

As shown in the enlarged view of Fig. 12, a drain 21 is formed on the bottom portion 26b of the sensor cap 26 at its radially outer position. In addition according to this embodiment, an annular groove 27 is formed on the outer circumference of the inner-side end of the outer member 23. The sensor cap 26 is press-fitted onto the outer circumference of the outer member 23 the outer-side end of the fitting portion 26a and is caulked onto the annular groove 27 by forming a caulked portion 28. This makes it possible to prevent the sensor cap 26 from being axially slipped off from the outer member 23 and to keep the original air gap. In addition, although the amount of the deformation at the fitting portion of the outer member due to the input load from the wheel becomes larger in thin area of the outer member and thus this fact is unfavorable to prevent the member from being axially slipped off, the caulking of the sensor cap increases the fastening force of the sensor cap 26 and thus contributes to reduction of thickness of the outer member 23 and accordingly weight of whole the bearing apparatus.

The present invention has been described with reference to the preferred embodiments. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

### Applicability in Industry

The present invention can be applied to any type of wheel bearing apparatus provided with a rotational speed detecting apparatus for a driven wheel type and a inner ring rotation type using balls or tapered rollers as rolling elements.

### Description of Reference numerals

- 1, 31: inner member
- 2, 23, 32: outer member
- 2a, 2b: outer raceway surface
- 2c: body mounting flange
- 3: rolling element
- 3a: rolling element of outer-side
- 3b: rolling element of inner-side
- 4, 34: hub wheel
- 4a, 5a: inner raceway surface
- 4b: cylindrical portion
- 4c, 28: caulked portion
- 4d: shaft portion
- 5: inner ring
- 6: wheel mounting flange
- 6a: hub bolt
- 6b: inner-side base of wheel mounting flange
- 7, 8: cage
- 9: seal
- 10: recessed portion
- 11: pulser ring
- 12: annular supporting member
- 12a, 14a, 16a, 22a, 24a, 26a, 33a: fitting portion
- 12b: standing portion
- 13: magnetic encoder
- 14, 22, 33: cap
- 14b, 22b: radially reducing portion
- 14c, 22c: disc portion
- 14d: bent portion
- 14e, 16b, 24b, 26b, 37a: bottom portion
- 15: elastic member
- 15a: annular projection
- 16, 24, 26, 37: sensor cap
- 17: insert aperture
- 18: rotational speed sensor
- 19: aperture
- 20: securing nut
- 21, 25: drain
- 27: annular groove
- 32a: inner-side end face of outer member
- 35: core metal
- 36: sealing member
- 36a: side lip
- 36b: dust lip
- 36c: grease lip
- 38: mounting member
- 39: mounting bolt
- 51: outer member
- 51a: outer raceway surface
- 51b: body mounting flange
- 52: inner member
- 53: ball
- 54: wheel mounting flange
- 55: hub wheel
- 55a, 56a: inner raceway surface
- 55b: cylindrical portion
- 56: inner ring
- 57: cage
- 58: caulked portion
- 59: seal
- 60: magnetic encoder
- 61: annular supporting member
- 62: encoder body
- 63: cover
- 63a: cylindrical portion
- 63b, 67b: lid portion
- 64: flange
- 65: sensor mounting portion
- 66: sensor mounting bore
- 67: core metal
- 67a: cylindrical portion
- 68: cable
- 69: sensor
- 69a: insert portion
- A: air gap
- di: ball diameter of inner-side ball row
- do: ball diameter of outer-side ball row
- H1: sheet thickness of cap
- H2: sheet thickness of disc portion of cap
- L1: press-fitting position of the cap
- L2: length of rotational speed sensor
- PCDi: pitch circle diameter of inner-side ball row
- PCDo: pitch circle diameter of outer-side ball row
- t: sheet thickness of sensor cap
- Zi: number of balls of inner-side ball row
- Zo: number of balls of outer-side ball row

## Claims

1. A wheel bearing apparatus provided with a rotational speed detecting apparatus comprising:
an outer member (2, 23, 32) integrally formed on its outer circumference with a body mounting flange (2c) to be mounted on a knuckle and on its inner circumference with double row outer raceway surfaces (2a, 2a; 2a, 2b);
an inner member (1, 31) including a hub wheel (4, 34) and at least one inner ring (5), the hub wheel (4, 34) being integrally formed on its one end with a wheel mounting flange (6) and having a cylindrical portion (4b) axially extending from the wheel mounting flange (6), the inner ring (5) being press-fitted onto the cylindrical portion (4b) of the hub wheel (4, 34), the inner member (1, 31) being formed on its outer circumference with double row inner raceway surfaces (4a, 5a) opposing to the double row outer raceway surfaces (2a, 2a; 2a, 2b);
double row rolling elements (3, 3; 3a, 3b) contained between the inner raceway surfaces (4a, 5a) and outer raceway surfaces (2a, 2a; 2a, 2b) of the inner member (1, 31) and outer member (2, 23, 32);
a pulser ring (11) adapted to be fitted onto the outer circumference of the inner ring (5) and having a magnetic characteristics alternately and equidistantly varying along its circumferential direction;
a first cup-shaped sensor cap (16, 24, 26, 37) press-formed of austenitic stainless steel sheet, coated by cation electro-deposition, and fitted on the inner-side end of the outer member (2, 23, 32);
a rotational speed sensor (18) mounted on the first cup-shaped sensor cap (16, 24, 26, 37) at a radially outer position thereof, the rotational speed sensor (18) being arranged oppositely to the pulser ring (11) via a predetermined axial air gap;
a second cup-shaped cap (14, 22, 33) mounted on the outer member (2, 23, 32), the second cup-shaped cap (14, 22, 33) being press-formed of austenitic stainless steel sheet and comprising a cylindrical fitting portion (14a, 22a, 33a) press-fitted into the inner circumference of the inner-side end of the outer member (2, 23, 32), a disc portion (14c, 22c) extending radially inward from the fitting portion (14a, 22a, 33a) and opposing to the pulser ring (11) via a small axial gap, and a bottom portion (14e) extending from the disc portion (14c, 22c) via a bent portion (14d) to cover the inner-side end of the inner member (1, 31); and
the rotational speed sensor (18) being arranged oppositely to the pulser ring (11) via the disc portion (14c, 22c) of the second cup-shaped cap (14, 22, 33) to which the rotational speed sensor (18) is closely arranged; **characterized in**:
**that** the second cup-shaped cap (14, 22, 33) is coated by preserving film wherein the preserving film is formed of cation electro-deposition and primarily coated by phosphoric zinc treatment.

2. A wheel bearing apparatus provided with a rotational speed detecting apparatus of claim 1 wherein an elastic member (15) comprising synthetic rubber is integrally adhered by vulcanized coating to the outer circumferential surface of the fitting portion (14a, 22a) of the second cup-shaped cap (14, 22).

3. A wheel bearing apparatus provided with a rotational speed detecting apparatus of claim 1 or 2 wherein the sheet thickness (H2) at least of the disc portion (22c) of the second cup-shaped cap (22) is thinner than the sheet thickness (H1) of the other portions.

4. A wheel bearing apparatus provided with a rotational speed detecting apparatus of any one of claims 1 to 3 wherein the air gap between the second cup-shaped cap (14, 22, 33) and the rotational speed sensor (18) is set at a range of 0.3 to 1.0 mm.

5. A wheel bearing apparatus provided with a rotational speed detecting apparatus of claim 1 wherein the first cup-shaped sensor cap (16, 24, 26, 37) comprises a cylindrical fitting portion (16a, 24a, 26a) to be fitted on the end of the outer member (2, 23, 32), and a bottom portion (16b, 26b, 37a) extending radially inward from the fitting portion (16a, 24a, 26a) to be closely contacted to the inner-side end face (32a) of the outer member (2, 23, 32), and wherein the bottom portion (16b, 26b, 37a) is formed with an insert aperture (17) in parallel with the ground into which the rotational speed sensor (18) is detachably mounted.

6. A wheel bearing apparatus provided with a rotational speed detecting apparatus of claim 5 wherein the fitting portion (26a) of the first cup-shaped sensor cap (26) is press-fitted onto the outer circumference of the inner-side end of the outer member (23), and wherein an annular groove (27) is formed on the outer circumference of the inner-side end of the outer member (23) and the outer-side end of the fitting portion (26a) is caulked onto the annular groove (27).

7. A wheel bearing apparatus provided with a rotational speed detecting apparatus of claim 5 or 6 wherein the first cup-shaped sensor cap (16, 24, 26, 37) is formed of austenitic stainless steel sheet having anti-corrosion property.

8. A wheel bearing apparatus provided with a rotational speed detecting apparatus of any one of claims 5 to 7 wherein a drain is formed on the first cup-shaped sensor cap (16, 24, 26) at a corner between the fitting portion (16a, 24a, 26a) and the bottom portion (16b, 24b, 26b) nearest to the ground.

9. A wheel bearing apparatus provided with a rotational speed detecting apparatus of any one of claims 5 to 8 wherein an aperture (19) is formed on the bottom portion (16b, 24b, 26b, 37a) of the first cup-shaped sensor cap (16, 24, 26, 37) at or near the center thereof and a securing nut (20) is press-fitted into the aperture (19) from the outer-side of the bottom portion (16b, 24b, 26b, 37a), and wherein the rotational speed sensor (18) is secured by fastening a mounting bolt (39) into the securing nut (20).

10. A wheel bearing apparatus provided with a rotational speed detecting apparatus of claim 1 wherein the pitch circle diameter (PCDo) of the outer-side row of rolling elements (3a) is set larger than the pitch circle diameter (PCDi) of the inner-side row of rolling elements (3b), wherein the diameter (do) of each rolling element (3a) of the outer-side row is set smaller than the diameter (di) of each rolling element (3b) of the inner-side row, and wherein the number (Zo) of the outer-side row of rolling element (3a) is set larger than the number (Zi) of the inner-side row of rolling element (3b).

## Patentansprüche

1. Radlagervorrichtung mit einer Vorrichtung zur Drehgeschwindigkeitserkennung, umfassend:
ein äußeres Element (2; 23; 32), das an seinem Außenumfang mit einem Körperbefestigungsflansch (2c) zur Befestigung an einem Achsschenkel, und an seinem Innenumfang mit doppelreihigen äußeren Laufflächen (2a, 2a; 2a, 2b) einstückig ausgebildet ist;
ein inneres Element (1, 31), das eine Radnabe (4, 34) und mindestens einen Innenring (5) beinhaltet, wobei die Radnabe (4, 34) auf ihrem einen Ende einstückig mit einem Radbefestigungsflansch (6) ausgebildet ist und einen zylindrischen Abschnitt (4b) aufweist, der sich axial von dem Radbefestigungsflansch (6) erstreckt, wobei der Innenring (5) auf den zylindrischen Abschnitt (4b) der Radnabe (4, 34) aufgepresst ist, wobei das innere Element (1, 31) an seinem Außenumfang mit doppelreihigen inneren Laufflächen (4a, 5a), die den doppelreihigen äußeren Laufflächen (2a, 2a; 2a, 2b) entgegengesetzt sind, ausgebildet ist;
doppelreihige Rollelemente (3, 3; 3a, 3b), die zwischen den inneren Laufflächen (4a, 5a) und äußeren Laufflächen (2a, 2a; 2a, 2b) des inneren Elements (1, 31) und äußeren Elements (2, 23, 32) eingeschlossen sind;
einen Impulsgeberring (11), der dazu ausgebildet ist, an dem Außenumfang des Innenrings (5) befestigt zu werden, und magnetische Eigenschaften aufweist, die entlang seiner Umfangsrichtung abwechselnd und äquidistant variieren;
eine erste kappenförmige Sensorkappe (16, 24, 26, 37), die aus austentischem rostfreien Stahlblech pressgeformt, mittels Kationenelektroabscheidung beschichtet und an dem Innenseitenende des äußeren Elements (2, 23, 32) angebracht ist;
einen Drehgeschwindigkeitssensor (18), der an der ersten kappenförmigen Sensorkappe (16, 24, 26, 37) an einer radial äußeren Position davon befestigt ist, wobei der Drehgeschwindigkeitssensor (18) über einen axialen Luftspalt dem Impulsgeberring (11) gegenüberliegend angeordnet ist;
eine zweite kappenförmige Kappe (14, 22, 33), die an dem äußeren Element (2, 23, 32) befestigt ist, wobei die zweite kappenförmige Kappe (14, 22, 33) aus austentischem rostfreien Stahlblech pressgeformt ist und einen zylindrischen Passabschnitt (14a, 22a, 33a), der in den Innenumfang des Innenseitenendes des äußeren Elements (2, 23, 32) eingepresst ist, einen Scheibenabschnitt (14c, 22c), der sich von dem Passabschnitt (14a, 22a, 33a) aus radial nach innen erstreckt und dem Impulsgeberring (11) über einen kleinen axialen Spalt gegenüberliegt, und einen unteren Abschnitt (14e), der sich von dem Scheibenabschnitt (14c, 22c) aus über einen gebogenen Abschnitt (14d) erstreckt, um das Innenseitenende des inneren Elements (1; 31) zu bedecken, umfasst; und
wobei der Drehgeschwindigkeitssensor (18) über den Scheibenabschnitt (14c, 22c) der zweiten kappenförmigen Kappe (14, 22, 33), in dessen Nähe der Drehgeschwindigkeitssensor (18) angeordnet ist, dem Impulsgeberring (11) gegenüberliegend angeordnet ist; **dadurch gekennzeichnet, dass**:
die zweite kappenförmige Kappe (14, 22, 33) mit einem Schutzüberzug beschichtet ist, wobei der Schutzüberzug durch Kationenelektroabscheidung gebildet und hauptsächlich mittels Phosphor-Zink-Behandlung beschichtet wird.

2. Radlagervorrichtung mit einer Vorrichtung zur Drehgeschwindigkeitserkennung nach Anspruch 1, wobei ein elastisches Element (15), das Kunstkautschuk umfasst, durch Vulkanisationsbeschichten an der äußeren Umfangsfläche des Passabschnitts (14, 22a) der zweiten kappenförmigen Kappe (14, 22) einstückig anhaftet.

3. Radlagervorrichtung mit einer Vorrichtung zur Drehgeschwindigkeitserkennung nach Anspruch 1 oder 2, wobei die Blechdicke (H2) zumindest des Scheibenabschnitts (22c) der zweiten kappenförmigen Kappe (22) dünner als die Blechdicke (H1) der anderen Abschnitte ist.

4. Radlagervorrichtung mit einer Vorrichtung zur Drehgeschwindigkeitserkennung nach einem der Ansprüche 1 bis 3, wobei der Luftspalt zwischen der zweiten kappenförmigen Kappe (14, 22, 33) und dem Drehgeschwindigkeitssensor (18) auf einen Bereich von 0,3 bis 1,0 mm eingestellt ist.

5. Radlagervorrichtung mit einer Vorrichtung zur Drehgeschwindigkeitserkennung nach Anspruch 1, wobei die erste kappenförmige Sensorkappe (16, 24, 26, 37) einen zylindrischen Passabschnitt (16a, 24a, 26a) zum Anbringen an dem Ende des äußeren Elements (2, 23, 32) und einen unteren Abschnitt (16b, 26b, 37a), der sich von den Passabschnitt (16a, 24a, 26a) aus radial nach innen erstreckt, um in engem Kontakt mit der Innenseitenendfläche (32a) des äußeren Elements (2, 23, 32) zu stehen, umfasst, und wobei der untere Abschnitt (16b, 26b, 37a) mit einer Einsatzöffnung (17), die parallel zum Boden ist, ausgebildet ist, in der der Drehgeschwindigkeitssensor (18) abnehmbar befestigt ist.

6. Radlagervorrichtung mit einer Vorrichtung zur Drehgeschwindigkeitserkennung nach Anspruch 5, wobei der erste Passabschnitt (26a) der ersten kappenförmigen Sensorkappe (26) auf dem Außenumfang des Innenseitenendes des äußeren Elements (23) aufgepresst ist, und wobei eine Ringnut (27) auf dem Außendurchmesser des Innenseitenendes des äußeren Elements (23) gebildet ist und das Außenseitenende des Passabschnitts (26a) auf der Ringnut (27) abgedichtet ist.

7. Radlagervorrichtung mit einer Vorrichtung zur Drehgeschwindigkeitserkennung nach Anspruch 5 oder 6, wobei die erste kappenförmige Sensorkappe (16, 24, 26, 37) aus einem austentischem rostfreien Stahlblech gebildet ist, das Korrosionsschutzeigenschaften aufweist.

8. Radlagervorrichtung mit einer Vorrichtung zur Drehgeschwindigkeitserkennung nach einem der Ansprüche 5 bis 7, wobei auf der ersten kappenförmigen Sensorkappe (16, 24, 26) an einer Ecke zwischen dem Passabschnitt (16a, 24a, 26a) und dem unteren Abschnitt (16b, 24b, 26b), die am nächsten zum Boden ist, ein Auslauf gebildet ist.

9. Radlagervorrichtung mit einer Vorrichtung zur Drehgeschwindigkeitserkennung nach einem der Ansprüche 5 bis 8, wobei an dem unteren Abschnitt (16b, 24b, 26b, 37a) der ersten kappenförmigen Sensorkappe (16, 24, 26, 37) in oder nahe der Mitte davon eine Öffnung (19) gebildet ist und von der Außenseite des unteren Abschnitts (16b, 24b, 26b, 37a) eine Sicherungsmutter (20) in die Öffnung (19) eingepresst ist, und wobei der Drehgeschwindigkeitssensor (18) durch Befestigen einer Befestigungsschraube (39) in der Sicherungsmutter (20) gesichert wird.

10. Radlagervorrichtung mit einer Vorrichtung zur Drehgeschwindigkeitserkennung nach Anspruch 1, wobei der Teilkreisdurchmesser (PCDo) der außenseitigen Reihe von Rollelementen (3a) größer als der Teilkreisdurchmesser (PCDi) der innenseitigen Reihe von Rollelementen (3b) eingestellt ist, wobei der Durchmesser (do) von jedem Rollelement (3a) der außenseitigen Reihe kleiner als der Durchmesser (di) von jedem Rollelement (3b) der innenseitigen Reihe eingestellt ist, und wobei die Anzahl (Zo) der außenseitigen Reihe von Rollelementen (3a) größer als die Anzahl (Zi) der innenseitigen Reihe von Rollelementen (3b) eingestellt ist.

## Revendications

1. Appareil de roulement de roue doté d'un appareil de détection de la vitesse de rotation, comprenant :
un élément extérieur (2, 23, 32) formé, sur sa circonférence extérieure, de façon solidaire avec une bride de fixation de corps (2c) devant être montée sur une articulation, ledit élément extérieur étant formé, sur sa circonférence intérieure, avec des surfaces de chemin de roulement extérieur à deux rangées (2a, 2a ; 2a, 2b);
un élément intérieur (1, 31) comprenant une roue à moyeu (4, 34) et au moins une bague intérieure (5), la roue à moyeu (4, 34) étant formée, sur son extrémité, de façon solidaire avec une bride de fixation de roue (6) et ayant une portion cylindrique (4b) s'étendant axialement à partir de la bride de fixation de roue (6), la bague intérieure (5) étant montée en force sur la portion cylindrique (4b) de la roue à moyeu (4, 34), l'élément intérieur (1, 31) étant formé sur sa circonférence extérieure avec des surfaces de chemin de roulement intérieur à deux rangées (4a, 5a), lesdites surfaces étant opposées aux surfaces de chemin de roulement extérieur à deux rangées (2a, 2a ; 2a, 2b) ;
des éléments de roulement à deux rangées (3, 3 ; 3a, 3b) contenus entre les surfaces de chemin de roulement intérieur (4a, 5a) et les surfaces de chemin de roulement extérieur (2a, 2a ; 2a, 2b) de l'élément intérieur (1, 31) et de l'élément extérieur (2, 23, 32) ;
une bague formant générateur d'impulsions (11) adaptée pour être montée sur la circonférence extérieure de la bague intérieure (5) et ayant des caractéristiques magnétiques variant de façon alternée et de façon équidistante le long de sa direction circonférentielle ;
un premier capuchon de capteur en forme de coupelle (16, 24, 26, 37) formé à la presse à partir d'une tôle en acier inoxydable austénitique, premier capuchon qui a un revêtement obtenu par électrodéposition cationique et est monté sur l'extrémité côté intérieur de l'élément extérieur (2, 23, 32) ;
un capteur de la vitesse de rotation (18) monté sur le premier capuchon de capteur en forme de coupelle (16, 24, 26, 37) au niveau d'une position extérieure radialement dudit premier capuchon, le capteur de la vitesse de rotation (18) étant agencé de façon opposée à la bague formant générateur d'impulsions (11), via un entrefer axial prédéterminé ;
un second capuchon en forme de coupelle (14, 22, 33) monté sur l'élément extérieur (2, 23, 32), le second capuchon en forme de coupelle (14, 22, 33) étant formé à la presse, à partir d'une tôle en acier inoxydable austénitique, et comprenant une portion de montage cylindrique (14a, 22a, 33a) montée en force dans la circonférence intérieure de l'extrémité côté intérieur de l'élément extérieur (2, 23, 32), une portion de disque (14c, 22c) s'étendant radialement vers l'intérieur à partir de la portion de montage (14a, 22a, 33a) et opposée à la bague formant générateur d'impulsions (11), via un faible intervalle axial, et une portion inférieure (14e) s'étendant à partir de la portion de disque (14c, 22c) via une portion courbée (14d), pour couvrir l'extrémité côté intérieur de l'élément intérieur (1, 31) ; et
le capteur de la vitesse de rotation (18) est agencé de façon opposée à la bague formant générateur d'impulsions (11), via la portion de disque (14c, 22c) du second capuchon en forme de coupelle (14, 22, 33), capuchon tout près duquel est agencé le capteur de la vitesse de rotation (18) ;
**caractérisé**
**en ce que** le second capuchon en forme de coupelle (14, 22, 33) est recouvert d'un film de préservation où le film de préservation est formé par électrodéposition cationique, en ayant un revêtement obtenu principalement par traitement au zinc phosphorique.

2. Appareil de roulement de roue doté d'un appareil de détection de la vitesse de rotation selon la revendication 1, dans lequel un élément élastique (15) se composant de caoutchouc synthétique est collé de façon solidaire, par un revêtement vulcanisé, sur la surface circonférentielle extérieure de la portion de montage (14a, 22a) du second capuchon en forme de coupelle (14, 22).

3. Appareil de roulement de roue doté d'un appareil de détection de la vitesse de rotation selon la revendication 1 ou 2, dans lequel l'épaisseur de tôle (H2), au moins de la portion de disque (22c) du second capuchon en forme de coupelle (22), est plus mince que l'épaisseur de tôle (H1) des autres portions.

4. Appareil de roulement de roue doté d'un appareil de détection de la vitesse de rotation selon l'une quelconque des revendications 1 à 3, dans lequel l'entrefer entre le second capuchon en forme de coupelle (14, 22, 33) et le capteur de la vitesse de rotation (18) est réglé suivant une plage comprise entre 0,3 mm et 1,0 mm.

5. Appareil de roulement de roue doté d'un appareil de détection de la vitesse de rotation selon la revendication 1, dans lequel le premier capuchon de capteur en forme de coupelle (16, 24, 26, 37) comprend une portion de montage cylindrique (16a, 24a, 26a) devant être montée sur l'extrémité de l'élément extérieur (2, 23, 32), et comprend une portion inférieure (16b, 26b, 37a) s'étendant radialement vers l'intérieur à partir de la portion de montage (16a, 24a, 26a) devant être étroitement au contact de la face d'extrémité côté intérieur (32a) de l'élément extérieur (2, 23, 32), appareil dans lequel la portion inférieure (16b, 26b, 37a) est formée en ayant une ouverture d'insertion (17) placée parallèlement au fond dans lequel le capteur de la vitesse de rotation (18) est monté de façon amovible.

6. Appareil de roulement de roue doté d'un appareil de détection de la vitesse de rotation selon la revendication 5, dans lequel la portion de montage (26a) du premier capuchon de capteur en forme de coupelle (26) est montée en force sur la circonférence extérieure de l'extrémité côté intérieur de l'élément extérieur (23), et dans lequel une gorge annulaire (27) est formée sur la circonférence extérieure de l'extrémité côté intérieur de l'élément extérieur (23), et l'extrémité côté extérieur de la portion de montage (26a) est matée sur la gorge annulaire (27).

7. Appareil de roulement de roue doté d'un appareil de détection de la vitesse de rotation selon la revendication 5 ou 6, dans lequel le premier capuchon de capteur en forme de coupelle (16, 24, 26, 37) est formé à partir d'une tôle en acier inoxydable austénitique ayant une propriété anticorrosion.

8. Appareil de roulement de roue doté d'un appareil de détection de la vitesse de rotation selon l'une quelconque des revendications 5 à 7, dans lequel un drain est formé sur le premier capuchon de capteur en forme de coupelle (16, 24, 26), au niveau d'une partie angulaire située entre la portion de montage (16a, 24a, 26a) et la portion inférieure (16b, 24b, 26b) la plus proche du fond.

9. Appareil de roulement de roue doté d'un appareil de détection de la vitesse de rotation selon l'une quelconque des revendications 5 à 8, dans lequel une ouverture (19) est formée sur la portion inférieure (16b, 24b, 26b, 37a) du premier capuchon de capteur en forme de coupelle (16, 24, 26, 37) au niveau du centre ou à proximité du centre dudit capuchon, et un écrou de fixation (20) est monté en force dans l'ouverture (19) à partir du côté extérieur de la portion inférieure (16b, 24b, 26b, 37a), et dans lequel le capteur de la vitesse de rotation (18) est fixé en bloquant un boulon de montage (39), dans l'écrou de fixation (20).

10. Appareil de roulement de roue doté d'un appareil de détection de la vitesse de rotation selon la revendication 1, dans lequel le diamètre de cercle primitif (PCDo) de la rangée côté extérieur d'éléments de roulement (3a) est réglé en étant plus grand que le diamètre de cercle primitif (PCDi) de la rangée côté intérieur d'éléments de roulement (3b), appareil dans lequel le diamètre (do) de chaque élément de roulement (3a) de la rangée côté extérieur est réglé en étant plus petit que le diamètre (di) de chaque élément de roulement (3b) de la rangée côté intérieur, et dans lequel le nombre (Zo) de la rangée côté extérieur de l'élément de roulement (3a) est réglé en étant supérieur au nombre (Zi) de la rangée côté intérieur de l'élément de roulement (3b).
